# EUROPEAN PATENT APPLICATION

(11) **EP 4 651 014 A1**
(43) Date of publication of application: **19.11.2025**
(21) Application number: 25176716.6
(22) Date of filing: 15.05.2025
(51) Int. Cl.: G06F 40/30, G06F 16/355

(54) **METHOD FOR LABELING LANGUAGE DATA STRUCTURES USING LANGUAGE MODEL**

(30) Priority: 17.05.2024 US 202418668113
(71) Applicant: Intuit Inc., Mountain View, CA 94043 (US)
(72) Inventor: SHEETRIT, Eilon, Mountain View, 94043 (US); MARGOLIN, Itay, Mountain View, 94043 (US); FARHI, Ido Joseph, Mountain View, 94043 (US)
(74) Representative: D Young & Co LLP

(57) **Abstract**

A method including applying a language model to datasets to generate topics assigned to the datasets. Each of the topics includes at least one of a natural language text word and a natural language phrase. The method also includes applying an encoding model to the topics to generate a corresponding vector data structures storing embedded topics. Each embedded topic of the embedded topics is associated with one corresponding vector in the vector data structures. The method also includes applying a clustering model to the vector data structures to generate a cluster including a subset of the vector data structures. The subset includes a reduced number of the vector data structures. The method also includes modifying, according to the cluster, the datasets.

## Description

### BACKGROUND

A computing system may manipulate a large number of language data structures. Language data structures are computer-readable data structures stored on a non-transitory computer-readable storage medium, and which contain language data (*e.g.,* alphanumeric text or special characters). Examples of language data structures include word processing files, email files, JAVASCRIPT^{®} object notation (JSON) files, hypertext transfer protocol (HTTP) files, descriptions of image files, audio files, or other descriptions of non-language files, as well as many other types of language data structures.

The number of language data structures stored for a computing system may become difficult to manage. Thus, devices and methods for instructing a computer to better organize, label, and present language data structures would have a useful technological benefit.

### SUMMARY

Particular aspects are set out in the appended independent claims. Various optional embodiments are set out in the dependent claims. One or more embodiments provide for a method. The method includes applying a language model to datasets to generate topics assigned to the datasets. Each of the topics includes at least one of a natural language text word and a natural language phrase. The method also includes applying an encoding model to the topics to generate a corresponding vector data structures storing embedded topics. Each embedded topic of the embedded topics is associated with one corresponding vector in the vector data structures. The method also includes applying a clustering model to the vector data structures to generate a cluster including a subset of the vector data structures. The subset includes a reduced number of the vector data structures. The method also includes modifying, according to the cluster, the datasets.

One or more embodiments provide for system. The system includes a processor and a data repository in communication with the processor. The data repository stores datasets and topics assigned to the datasets. Each of the topics includes at least one of a natural language text word and a natural language phrase. The data repository also stores a corresponding vector data structures storing embedded topics. The data repository also stores a cluster including a subset of the vector data structures. The subset includes a reduced number of the vector data structures. The system also includes a language model that, when executed by the processor and applied to the datasets, generates the topics. The system also includes an encoding model that, when executed by the processor and applied to the topics, generates the corresponding vector data structures such that each embedded topic of the embedded topics is associated with one corresponding vector in the vector data structures. The system also includes a clustering model that, when executed by the processor and applied to the vector data structures, generates the cluster. The system also includes a server controller that, when executed by the processor and applied to datasets, modifies the datasets according to the cluster.

One or more embodiments provide for another method. The method includes applying a language model to datasets to generate topics assigned to the datasets. Each of the topics includes at least one of a natural language text word and a natural language phrase. The method also includes applying an encoding model to the topics to generate a corresponding vector data structures storing embedded topics. Each embedded topic of the embedded topics is associated with one corresponding vector in the vector data structures. The method also includes applying a clustering model to the vector data structures to generate first a cluster including a first subset of the vector data structures that are within a first pre-determined semantic distance. Applying the clustering model also includes generating a second cluster including a second subset of the vector data structures that are within a second pre-determined semantic distance. The first subset and the second subset each includes a reduced number of the vector data structures. The method also includes modifying, according to the first cluster and the second cluster, the datasets to generate an organized data structure by organizing the datasets into a first group corresponding to the first cluster and a second group corresponding to the second cluster. The method also includes sorting the first group and the second group into an organized list. The method also includes labeling the first group according to a first name associated with a first medoid of the first subset. The method also includes labeling the second group according to a second name associated with a second medoid of the second subset. The method also includes presenting the organized list, including presenting the first group labeled with the first name and presenting the second group labeled with the second name.

Other aspects of one or more embodiments will be apparent from the following description and the appended claims.

### BRIEF DESCRIPTION OF DRAWINGS

FIG. 1 shows a computing system for labeling language data structures using a language model, in accordance with one or more embodiments.
FIG. 2 shows a flowchart of a method for labeling language data structures using a language model, in accordance with one or more embodiments.
FIG. 3A, FIG. 3B, FIG. 3C, FIG. 3D, and FIG. 3E show an example of a data flow for organizing email files according to a method for labeling language data structures using a language model, in accordance with one or more embodiments.
FIG. 4A and FIG. 4B show a user interface displaying a result of the data flow of FIG. 3A through FIG. 3E, in accordance with one or more embodiments.
FIG. 5A and FIG. 5B show a computing system, in accordance with one or more embodiments.

Like elements in the various figures are denoted by like reference numerals for consistency.

### DETAILED DESCRIPTION

One or more embodiments are directed to systems and methods for labeling language data structures using a language model. As indicated above, a technical issue may exist with respect to how to program a computer to organize, label, and present language data structures encoded on a computer-readable storage medium. One or more embodiments address the technical issue by using a large language model (a type of machine learning model) together with a clustering model (a different type of machine learning model) to label the language data structures using a common set of labels that represent topics associated with the language data structures. In other words, a combination of a large language model and a clustering model are used to determine topics to which groups of the language data structures belong. The language data structures then may be organized according to the topics.

Briefly, the language data structures (or selected parts of the language data structures) are provided as input to a large language model. The output of the large language model is proposed topics for the language data structures.

Duplicate topics may be removed from the proposed topics to generate intermediate topics. The intermediate topics are converted into a corresponding set of vector data structures. A vector data structure is a data structure suitable for input to a clustering model, and may take the form of a 1xN matrix of numbers that represent the word or phrase that constitute a corresponding topic.

The vector data structures are then input to the clustering model. The clustering model is programmed to generate clusters of the vectors that are within a pre-determined distance of each other. The distance between any two vectors (or between any two clusters of vectors) is a numerical assessment of the similarity of the two vectors (or two clusters of vectors). The output of the clustering model is a group of clusters of the vector data structures.

The clusters of vector data structures represent groups of topics. In other words, each cluster represents a group of related topics that may be described by a broader topic. For example, the term "tax" may be a broader topic that encompasses sub-topics such as "tax rules," "tax regulations," *etc.* However, all three terms of "tax," "tax rules," and "tax regulations" are considered to be "topics."

The name of each group of topics may be given the name of the topic that corresponds to the medoid of a given cluster of vector data structures. The medoid of a cluster is a cluster member for which the sum of dissimilarities to the other objects in the cluster is minimal (relative to the sums of dissimilarities determined for each of the other objects in the cluster). For example, the medoid of a cluster of terms may be the term for which the sum of quantitative semantic dissimilarities to the other terms in the cluster is minimal (relative to the sums of dissimilarities determined for each of the other objects in the cluster). Continuing the above example, the topics generated in a cluster topic (represented by the cluster of vector data structures) may have been "tax," "tax rules," and "tax regulations." In this particular example, the clustering model generated a cluster of the three terms. Another algorithm may determine that the term "tax" is the medoid of the cluster. Thus, the term "tax" is applied as a label to the cluster of topics.

The language data structures then may be grouped together into the groups of topics. For example, emails assigned to the topics that are within the "tax" cluster (*i.e.,* emails that were identified as being in one of the three topics of "tax," "tax rules," and "tax regulations") may be grouped together. The label of "tax" may be applied to the emails in the group. The group of emails then may be presented as a group.

One or more embodiments have technical benefits. In the case of a graphical user interface, a human user may more easily visualize groups of related emails or other language data structures. In the case of an automated processing system, an algorithm may process the language data structures using different rules according to the topic clusters assigned to the language data structures.

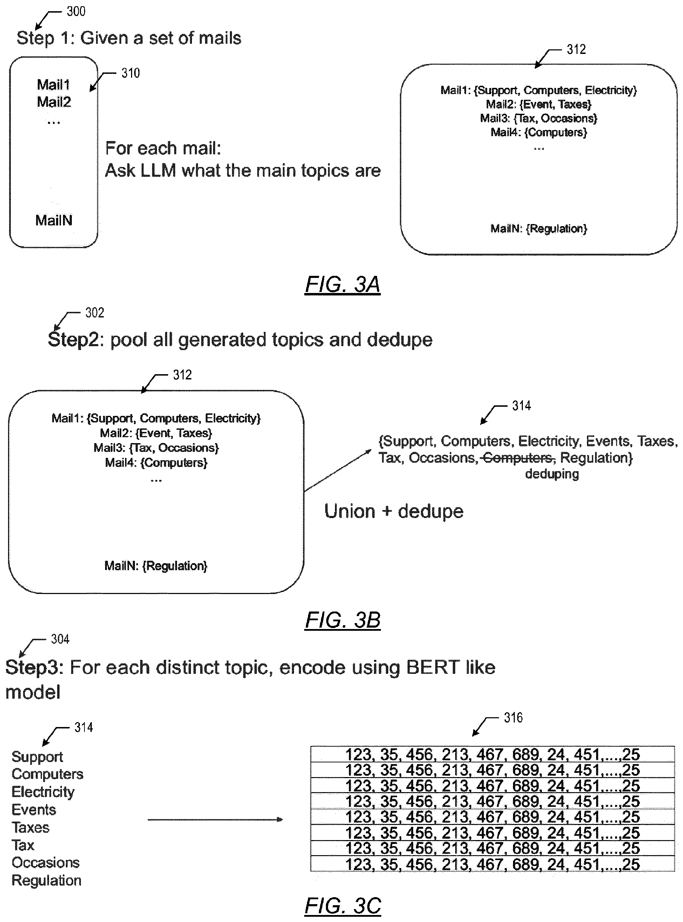

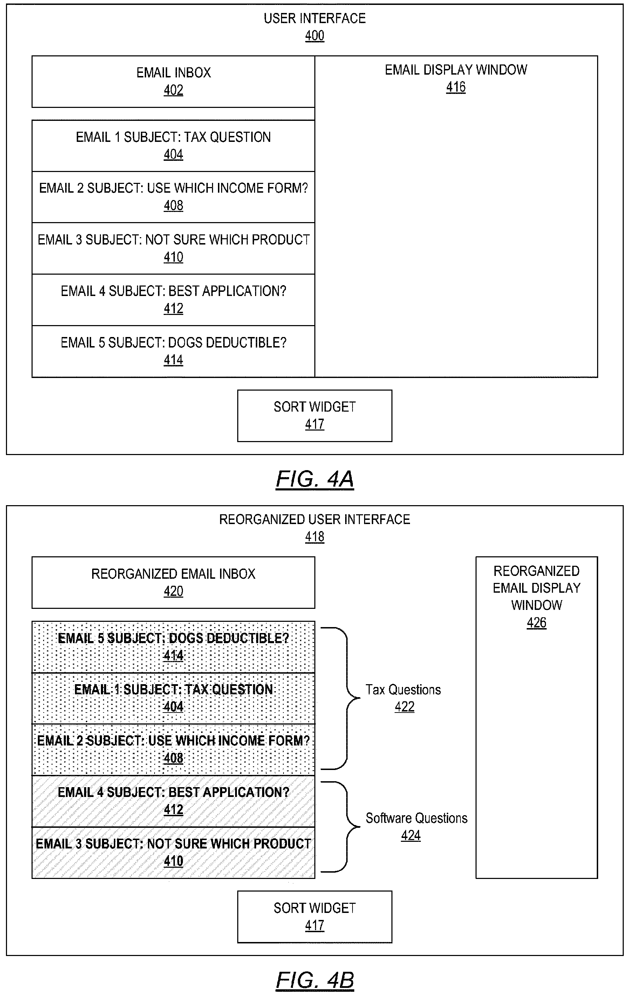

A specific example of the procedure described above is shown in FIG. 3A through FIG. 3E. A result of the procedure, as shown on a user interface, is shown in FIG. 4A and FIG. 4B.

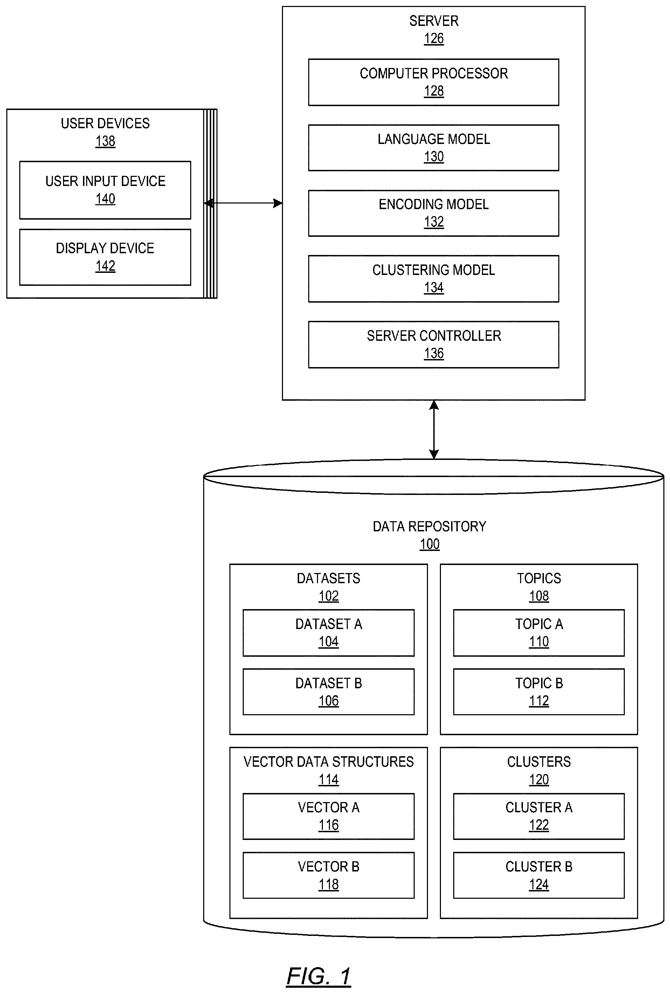

Attention is now turned to the figures. FIG. 1 shows a computing system, in accordance with one or more embodiments. The system shown in FIG. 1 includes a data repository (100). The data repository (100) is a type of storage unit or device (*e.g.,* a file system, database, data structure, or any other storage mechanism) for storing data. The data repository (100) may include multiple different, potentially heterogeneous, storage units, and/or devices.

The data repository (100) stores a number of datasets (102), including dataset A (104) and dataset B (106). A dataset is information stored in a language data structure. Thus, the datasets (102) are sets of information stored in discrete language data structures. For example, the datasets (102) may be emails, with each email corresponding to a corresponding dataset. In a specific example, the dataset A (104) may be one email, and the dataset B (106) may be another email. Each dataset may include subsets of data. For example, the dataset A (104) may be an email including a subset of data that stores a subject of the email and another subset of data that stores the body of the email.

The data repository (100) also stores a number of topics (108), including topic A (110) and topic B (112). A topic is a description or summary of the subject matter described in a corresponding dataset in the datasets (102). Thus, for example, the topic A (110) may be a description of the subject matter of the dataset A (104). Each of the topics (108) includes at least one of a natural language text word and a natural language phrase. In other words, the topics (108) are expressed at least partially in natural language text.

The data repository (100) also stores a number of vector data structures (114), including vector A (116) and vector B (118), which also may be referred to as "vectors." As used herein, vector data structure is a computer-readable data structure. A vector data structure may be a 1 by "N" matrix, though a vector data structure may be expressed as a higher dimensional matrix (e.g., an "M" by "N" matrix).

The cells of the matrix store values of features. A feature is a property or type of information storable in the vector data structure. For example, a feature may be a word, a letter, a phrase, or a description of some property. The value for the feature is a number that represents a quantitative description or representation of the feature. For example, if the feature is the letter "Y," then if the value for the feature is "1," then the letter "Y" is present in the corresponding topic. Similarly, if the feature is the phrase "taxable documents," then if the value for the feature is "0," then the phrase "taxable documents" is not present in the corresponding topic.

The vector data structures (114) corresponds to at least some of the number of topics. For example, the vector A (116) may correspond to the topic A (110) *(i.e.,* the vector A (116) is an embedded representation of the topic A (110)). In an embodiment, the datasets (102) also may be expressed as vector data structures. However, unless explicitly stated otherwise, the vector data structures (114) are embedded versions of the topics (108). Furthermore, unless otherwise stated, there is a one-to-one correspondence between the topics (108) and the vector data structures (114). Thus, for example, the topic A (110) corresponds to the vector A (116) on a one-to-one basis and the topic B (112) corresponds to the vector B (118) on a one-to-one basis.

Thus, the data repository (100), in storing the vector data structures (114), also may be characterized as storing embedded topics. An embedded topic *(i.e.,* a vector in the vector data structures (114)) stores the same information as the corresponding topic, but the information is stored in different data structures. For example, the topic A (110) may be stored in a first data structure as a natural language word or phrase. However, the corresponding vector A (116) may be stored as a vector data structure that only contains numbers representing the word or phrase.

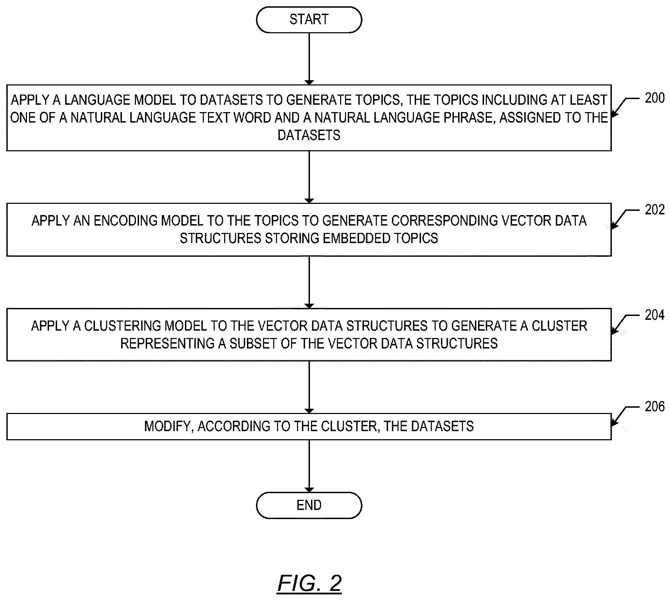

Not all of the topics (108) may be represented in the vector data structures (114). For example, as shown in FIG. 3B, duplicate topics may be eliminated during the data flow of FIG. 3A through FIG. 3E (and similarly may be eliminated during the method of FIG. 2). Thus, the vector data structures (114) may be embedded versions of some, but not necessarily all of the topics (108). If no topics are eliminated from consideration, then all of the topics (108) may be represented as the vector data structures (114).

The data repository (100) also stores a number of clusters. As used herein, a cluster is a subset (or group) of the vector data structures (114). In other words, a subset of the vector data structures (114) may constitute one of the clusters (120). In most cases the clusters (120) are subsets of the vector data structures (114) that are smaller than the overall set of vector data structures (114). Thus, for example, each of the cluster A (122) and the cluster B (124) represent a reduced number of the clusters (120).

The subsets of the vector data structures (114) that form the clusters (120) are clustered according to a semantic distance between other vector data structures in the vector data structures (114). A semantic distance is a numerical representation that quantifies a closeness in semantic meanings of two or more word or phrases with respect to each other. For example, the words "dog" and "cat" are both animals, and thus may be said to be semantically closer to each other than the words "dog" and "planet." The semantic closeness of "dog" and "cat," or of any other words or phrases, may be quantified by assigning numbers to the closeness of the meanings of words according to a pre-defined taxonomy. From the above, the clusters (120) may be said to be subsets of the vector data structures (114) that are within a pre-determined semantic distance of each other.

Generation of the clusters (120) is described with respect to FIG. 2. Use of the clusters (120) is also described with respect to FIG. 2.

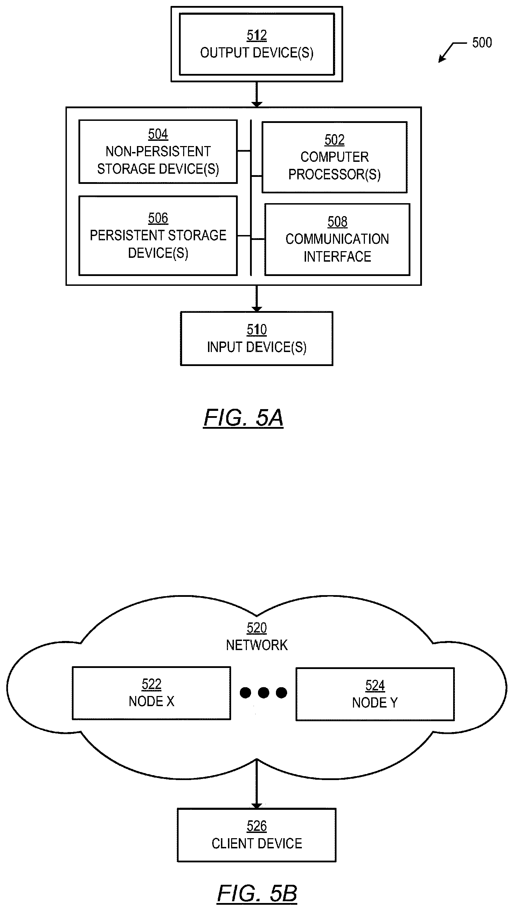

The system shown in FIG. 1A may include other components. For example, the system shown in FIG. 1A also may include a server (126). The server (126) is one or more computer processors, data repositories, communication devices, and supporting hardware and software. The server (126) may be in a distributed computing environment. The server (126) is configured to execute one or more applications, such as the language model (130), the encoding model (132), the clustering model (134), and the server controller (136). An example of a computer system and network that may form the server (126) is described with respect to FIG. 5A and FIG. 5B.

The server (126) includes a computer processor (128). The computer processor (128) is one or more hardware or virtual processors which may execute computer-readable program code that defines one or more applications such as the language model (130), the encoding model (132), the clustering model (134), and the server controller (136). An example of the computer processor (128) is described with respect to the computer processor(s) (502) of FIG. 5A.

The server (126) also hosts a language model (130). The language model (130) is a natural language processing machine learning model. An example of the language model (130) may be a large language model, such as CHATGPT^{®}. However, many different language models may be used. For example, the language model may be a statistical language model, a neural language model, a recurrent neural network model, a long short-term memory (LSTM ) model, and possibly many other types of language models.

The language model (130), when executed by the computer processor (128) and applied to the datasets (102), generates the topics (108). Further use of the language model (130) is described with respect to FIG. 2.

The language model (130) may be a large language model. A large language model is a type of language model trained on what some computer scientists may consider to be a large amount of language data. Execution of the large language model may include the generation of a prompt. A prompt is a set of natural language instructions that define the task to be performed by the large language model, constrain the execution of the large language model, or specify the datasets to be used by the large language model, or contain some other instruction to the large language model to be performed during execution of the large language model.

The server (126) also hosts an encoding model (132). The encoding model (132) may be an embedding machine learning model that is trained to convert natural language text into a vector data structure composed of features and values. The encoding model (132) may be a bidirectional encoder representation from transformers (BERT) machine learning model. Another example of the encoding model (132) may be an ADA-002 machine learning model. However, many different embedding models may be used.

The encoding model (132), when executed by the computer processor (128) and applied to the topics (108), generates the corresponding vector data structures (114) such that each embedded topic of the embedded topics is associated with one corresponding vector in the vector data structures (114). Further use of the encoding model (132) is described with respect to FIG. 2.

The server (126) also hosts a clustering model (134). The clustering model (134) is software or application specific hardware which, when executed by the computer processor (128) and applied to the vector data structures (114), generates the clusters (120). The clustering model (134) may be one of a number of clustering machine learning models. For example, the clustering model (134) may be a cosine similarity machine learning model for hierarchical clustering. The clustering model (134) also may be a K-means clustering machine learning model. Other types of clustering models may be used. Further use of the clustering model (134) is described with respect to FIG. 2.

The server (126) also hosts a server controller (136). The server controller (136) is software or application specific hardware which, when executed by the computer processor (128), embodies the method of FIG. 2. The server controller (136) may coordinate the execution of the language model (130), the encoding model (132), and the clustering model (134), and may perform other functions. In particular, the server controller (136), when executed by the computer processor (128) and applied to datasets (102), modifies the datasets (102) according to the clusters (120). Further use of the server controller (136) is described with respect to FIG. 2.

The system of FIG. 1 may include other components. For example, the system of FIG. 1 may include one or more user devices (138). The user devices (138) are computing systems, such as the computing system (500) shown in FIG. 5A. In some embodiments, the user devices (138) may not be part of the system of FIG. 1 (e.g., user devices owned and operated by third parties). User devices not part of the system of FIG. 1 may be referred to as "remote user devices." User devices that are part of the system of FIG. 1 may be referred to as "local user devices."

Each of the user devices (138) may include user input devices, such as user input device (140). The user input devices are devices which permit a user to interact with the user devices (138). For example, the user input device (140) may be a keyboard, mouse, touchscreen, microphone, haptic device, *etc.* Each user input device (140) may be in communication with a processor local to the corresponding user device (to be distinguished from the computer processor (128)).

Each of the user devices (138) may include display devices, such as display device (142). The display devices are devices which permit a user to view or otherwise understand information generated or reproduced by the user devices (138). For example, the display device (142) may be a monitor, touchscreen, television, speaker, haptic device, *etc.* Each display device (142) may be in communication with a processor local to the corresponding user device (to be distinguished from the computer processor (128)).

In another example, the display device (142) may be used to display modified datasets generated when the server controller (136) modifies the datasets (102) according to the method of FIG. 2. The display device (142) also may be used to display a label applied to each dataset of the modified datasets.

While FIG. 1 shows a configuration of components, other configurations may be used without departing from the scope of one or more embodiments. For example, various components may be combined to create a single component. As another example, the functionality performed by a single component may be performed by two or more components.

FIG. 2 shows a flowchart of a method for labeling language data structures using a language model, in accordance with one or more embodiments. The method of FIG. 2 may be implemented using the system of FIG. 1.

Step 200 includes applying a language model to datasets to generate topics, the topics including at least one of a natural language text word and a natural language phrase assigned to the datasets. If the language model is a large language model, then applying the language model may be performed by generating a prompt and then instructing the language model to execute the prompt. The prompt is natural language text that instructs the large language model regarding how the model is to execute. The prompt includes a dataset upon which to execute (*i.e.,* the datasets) and instructions regarding how to process the datasets. For example, the prompt may state "please generate one or more words or phrases for each of the datasets; each of the words or phrases is a topic that summarizes one of the datasets." Thus, applying the language model may be characterized as generating a prompt and inputting the prompt and the datasets to the large language model.

However, many different instructions may be used. Furthermore, the prompt may include additional limitations on how the large language model should consider the topics. For example, the large language model may be instructed that the topics should be constrained to a particular field of topics.

The language model may be a model other than a large language model (as described with respect to FIG. 1). When the language model is a type of model other than a large language model, then the process of applying the language model to the datasets may vary, depending on the type of language model. For example, in the case of a recurring neural network language model, the datasets may be converted into vectors. The vectors may then be provided as input to the model, and subsequently the model is executed. Other examples are possible.

Step 202 includes applying an encoding model to the topics to generate corresponding vector data structures storing embedded topics. Applying the encoding model includes providing the topics, generated at step 200, to an encoding model and then executing the encoding model. The encoding model outputs embedded topics, corresponding to the topics generated at step 200. Each embedded topic is associated with one corresponding vector in the vector data structures. Thus, step 202 may be characterized as transforming the topics into vector data structures *(i.e.,* the embedded topics.)

Data pre-processing may be performed before step 202. For example, after step 200, the method of FIG. 2 also may include deduplicating, before applying the encoding model at step 202, duplicate topics from the topics.

In an embodiment, generation of the topics at step 200 may result in many duplicative topics. For example, assume that the datasets are email files and that there are 1,000 email files. The language model determines 1,000 topics for the 1,000 email files, one per email file. However, of the 1,000 topics, many are duplicative. For example, the language model may have assigned the topic "tax question" to 500 of the emails. In this example, 499 instances of the topic "tax question" are deleted *(i.e.,* deduplicated), so that only one instance of the topic "tax question" remains.

The datasets are still assigned to their corresponding topics. Thus, the 500 emails mentioned above are still assigned to the topic of "tax question." However, for purposes of encoding the topics at step 202, an embodiment contemplates that unique topics may be encoded.

Step 204 includes applying a clustering model to the vector data structures to generate a cluster representing a subset of the vector data structures. Applying the clustering model includes providing the vector data structures as input to the clustering model and then executing the clustering model.

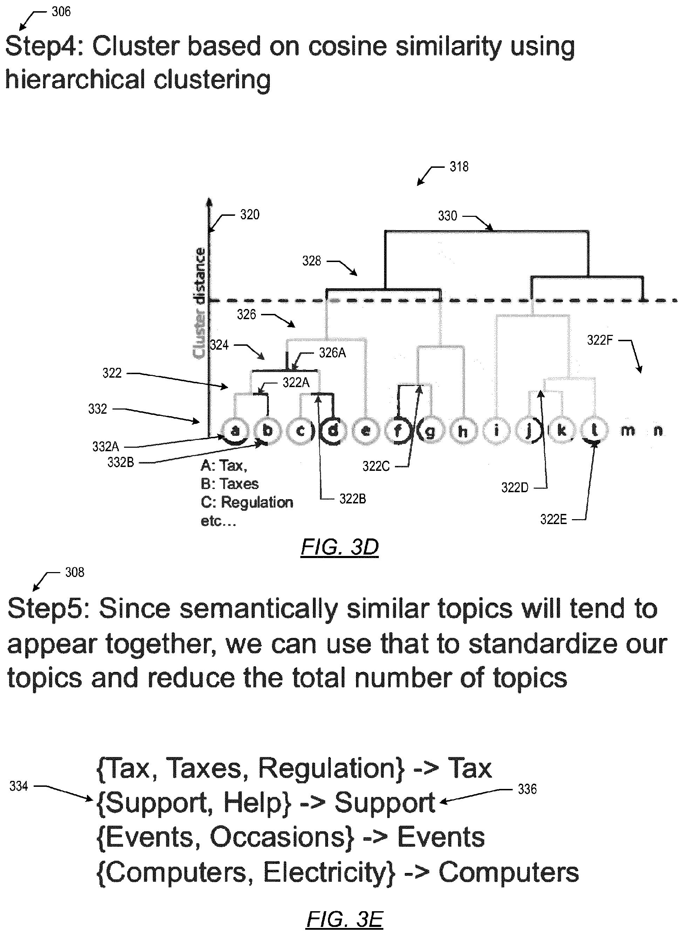

The precise clustering procedure depends on the type of clustering model. For example, the clustering model may be a cosine similarity clustering model using hierarchical clustering (*see, e.g.,* FIG. 3D). In this case, the clustering model determines a cosine similarity score (also referred to as a semantic similarity score) for each of the vectors (*i.e.,* embedded topics). The clustering model then groups the embedded topics into a set of hierarchical clusters according to the similarity scores of the vectors as compared to each other (again, *see* FIG. 3D). In particular, embedded vectors having similarity scores within a first pre-determined threshold are determined to be in a group of topics (*i.e.,* the highest level in the hierarchical clustering scheme). Embedded vectors having similarity scores within a second pre-determined threshold are determined to be in a next highest level in the hierarchical clustering scheme. The number of cluster levels may be pre-determined, but ultimately closely related embedded vectors are clustered into tight clusters. A "tight" cluster is a set of embedded vectors having semantic similarity scores within a pre-determined semantic distance of each other.

The result of clustering is a number of subsets vector data structures, arranged into a hierarchical clustering scheme in which each subset of vector data structures is one cluster. Each subset of vector data structures includes a reduced number of the vector data structures.

Alternatively stated, each cluster includes ones of the vector data structures that are within a pre-determined semantic distance of a selected vector in the vectors. The selected vector includes a medoid of the cluster. As described in FIG. 1, the medoid of a cluster is a cluster member for which the sum of dissimilarities to the other objects in the cluster is minimal (relative to the sums of dissimilarities determined for each of the other objects in the cluster). Thus, the medoid of each cluster is an embedded topic (*i.e.*, vector data structure) for which the sum of dissimilarities to the other embedded topics in the cluster is minimal. Accordingly, the medoid of a cluster may be referred to as a "center" of a cluster; however, the above-described definition controls the interpretation of the term "medoid."

Determining the medoid of each cluster may be useful for generating names for the clusters. In particular, an identifier is assigned to each cluster. The identifier may be a topic name of a medoid of the cluster. Stated differently, the embedded topic that is being named corresponds to a vector data structure in the subset of the vector data structures that is the medoid of the cluster under consideration. The topic name is a label of an embedded topic in the embedded topics (*e.g.,* the topic name identified at step 200). Stated differently, the name of each cluster is the name (*i.e.*, topic) of the medoid of that cluster.

Nevertheless, multiple labels may be included in each of the clusters. In particular, each vector may be provided with a topic label. Thus, a cluster having multiple vectors has multiple associated topic labels. However, the label applied to the cluster itself is the label assigned to the topic associated with the medoid vector that forms the medoid of the cluster. In other words, again, the name of a cluster is the name of the topic whose corresponding vector is the medoid for the cluster.

Step 204 may be varied. For example, step 204 may include receiving a request to broaden or narrow a topic in the topics. The request may be received from a user device (or some other automated process) based on received instructions to broaden or narrow the groupings of the datasets. When the request is received, step 204 also may include increasing or decreasing, prior to applying the clustering model, any of the pre-determined semantic distances described above.

In other words, the definition of cluster sizes may be varied. The definition of cluster sizes at each of the hierarchical levels may be independently controlled. Thus, for example, a cluster defining a highest hierarchical level may be broadened while concurrently narrowing another set of clusters defining a lowest hierarchical level. Other variations are possible.

Step 206 includes modifying, according to the cluster, the datasets. Modifying the datasets may vary depending upon an intended purpose of organizing the datasets, or the reason the embedded topics were organized into clusters. For example, modifying the datasets may include generating an organized data structure by organizing the datasets into groups corresponding to the cluster. In a specific example, if the datasets are email data files and the groups are topics assigned to the email data files, then the emails may be organized by topic. An example of organizing emails is shown in FIG. 4B.

In another example, if the datasets are document files, then the document files may be grouped according to the topics. The grouped document files then may be stored or presented accordingly.

More generally, after modifying the datasets, the method of FIG. 2 also may include presenting the organized data structure. For example, the organized data structure may be the sets of email data files organized into a larger data structure defining the locations and organizational structure of the emails. Presenting includes storing the organized data structure, providing the organized data structure to another automated process, displaying the organized data structure to a user, or some other action.

In a specific example, applying the clustering model at step 204 generates a second subset of the vector data structures *(i.e.,* a first cluster and a second cluster). In this case, modifying the data steps at step 206 may include generating an organized data structure by organizing the first and second subsets of vector data structures (*i.e.,* the first and second subsets) into a first group corresponding to the cluster and a second group corresponding to the second cluster. The first group and the second group then may be sorted into an organized list. An example of generating an organized data structure and sorting the clusters is shown in FIG. 4B.

In another embodiment, modifying the datasets at step 206 may include applying a label to a cluster. In this case modifying includes organizing the datasets, according to the cluster, into a subset datasets. The method then includes displaying, according to the label, the subset of the datasets. For example, email files may be organized into a cluster and displayed as a cluster of emails.

Displaying the subset of the datasets further may include at least one of highlighting the subset of the datasets, assigning the label to the subset of the datasets as a group, and assigning the label to each of the subset of the datasets. For example, the group of emails may be highlighted in order to visually show that a subset of datasets belongs to an assigned cluster.

The method of FIG. 2 may be varied, including more or fewer steps, or steps executed according to a different order. For example, in an embodiment, the method of FIG. 2 also may include receiving a value designating a number of permitted topics. In this example, applying the language model further may include generating a prompt and inputting the prompt and the datasets to the large language model. The prompt further includes an instruction to limit the number of topics generated to the value such that a total number of the topics are limited to the value. The method then includes, by way of operation of the large language model, further reducing the total number of topics generated. The total number of topics may be further reduced by deduplication, as described above.

The method of FIG. 2 may be embodied in a number of practical applications to enhance a computing system's capability to organize language data structures. For example, the datasets may be electronic messages. Each electronic message may be one dataset of multiple datasets. The cluster may be a group of the electronic messages organized by a subject type. Modifying the datasets may be re-organizing the electronic messages according to the subject type. The method may further include displaying, labeling, and highlighting the group according to the subject type.

The method of FIG. 2 may be further expanded. For example, an expanded method, based on the method of FIG. 2 is now presented.

The expanded method includes applying a language model to datasets to generate topics assigned to the datasets. Each of the topics include at least one of a natural language text word and a natural language phrase. The expanded method also includes applying an encoding model to the topics to generate a corresponding number of vector data structures storing embedded topics. Each embedded topic is associated with one corresponding vector in the vector data structures.

The expanded method also includes applying a clustering model to the vector data structures. The expanded method also includes generating a first cluster being a first subset of the vector data structures that are within a first pre-determined semantic distance. The expanded method also includes generating a second cluster being a second subset of the vector data structures that are within a second pre-determined semantic distance. The first subset and the second subset each may be a reduced number of the vector data structures.

The expanded method also includes modifying, according to the cluster, the sets to generate an organized data structure. Generating the organized data structure may be performed by organizing the datasets into a first group corresponding to the first cluster and a second group corresponding to the second cluster.

The expanded method also includes sorting the first group and the second group into an organized list. The expanded method also includes labeling the first group according to a first name associated with a first medoid of the first subset. The expanded method also includes labeling the second group according to a second name associated with a second medoid of the second subset. The expanded method also includes presenting the organized list, including presenting the first group labeled with the first topic name and presenting the second group labeled with the second topic name. An example of the expanded method is shown with respect to FIG. 3A through FIG. 4B.

While the various steps in the flowchart of FIG. 2 are presented and described sequentially, at least some of the steps may be executed in different orders, may be combined or omitted, and at least some of the steps may be executed in parallel. Furthermore, the steps may be performed actively or passively.

FIG. 3A, FIG. 3B, FIG. 3C, FIG. 3D, and FIG. 3E show an example of a data flow for organizing email files according to a method for labeling language data structures using language model, in accordance with one or more embodiments. The data flow of FIG. 3A through FIG. 3E may be an example of the method of FIG. 2, and may be performed using the system of FIG. 1. In the example, a set of emails (310) is to be organized according to topics, without human intervention.

FIG. 3A through FIG. 3E should be considered together as a whole. Thus, FIG. 3A through FIG. 3E share a common reference numeral system. Five steps are presented, including a first step (300), a second step (302), a third step (304), a fourth step (306), and a fifth step (308). The data flow provides a means for instructing a computer to automatically organize a large set of emails. A "large" set of emails is a number of emails greater than some pre-determined number of emails as determined by a user

FIG. 3A is a visualization of the first step (300) in the data flow. For each email, a large language model (LLM) is asked *(i.e.,* via a prompt used to execute the LLM) what the main topics are for the emails. The output of the large language model is a set of one or more suggested topics for each of the emails, as shown in topic list (312).

FIG. 3B is a visualization of the second step (302) in the data flow. The topic list (312) is pooled according to topic into a single list of topics. Then, duplicate topics are removed in a deduplication process. The result is a deduplicated list of topics (314).

FIG. 3C is a visualization of the third step (304) in the data flow. The deduplicated list of topics (314) is provided as input to an encoding model. The output of the encoding model is a set of vector data structures (316). The vector data structures (316) includes one vector data structure for each of the topics in the deduplicated list of topics (314). As shown, the information in the vector data structures (316) is groups of numbers, with each group of numbers representing some aspect of the corresponding topic (*e.g.,* a word, a letter, *etc*.)

FIG. 3D is a visualization of the fourth step (306) in the data flow. The vector data structures (316) from the third step (304) are clustered based on cosine similarity using hierarchical clustering.

The clustering is visually represented in FIG. 3D as a graph (318). Cluster distance (*i.e.,* the distance between a first cluster of the vector data structures and a second cluster of the vector data structures) is shown as an axis (320). If the distance between two clusters is greater than another two clusters, then the two clusters would be located further along the axis (320) in the direction of the arrowhead shown at the end of the axis (320). Thus, clusters along the bottom of the graph (318) have approximately equal distances to each other.

Higher cluster levels are represented by intersecting branches, such as a lowest cluster level (332), a first cluster level (322), second cluster level (324), third cluster level (326), fourth cluster level (328), and fifth cluster level (330). Each cluster level is a set of one or more clusters in the cluster level shown in FIG. 3D. Each cluster within a given cluster level is a set of the vector data structures that are within pre-determined distances of each other, with the pre-determined distance increasing with increasing cluster level.

In the example, five cluster levels are shown, though more or fewer cluster levels may be present. The vector data structures contained within each cluster level may be deemed a supercluster relative to a lower level cluster. For example, the set of vector data structures that form the fourth cluster level (328) may be described as a supercluster of the two clusters (*i.e.,* cluster (324A) and cluster (326B)) that form the third cluster level (326).

Thus, each cluster level represents a hierarchical level of the hierarchical clustering. Ultimately, the clusters of vector data structures are organized into a complete superset (*i.e.*, the fifth cluster level (330), representing the complete set of vector data structures). At the bottom level, the individual vector data structures are clustered into the smallest sets of clusters (*e.g.,* the cluster "a" and the cluster "b" as shown in FIG. 3D).

Again, any of the clusters shown in FIG. 3D may be one or more vector data structure. However, in most cases, the higher the hierarchical clustering level along the axis (320), the more vector data structures will be contained in a given cluster. Thus, again, the complete set of vector data structures may be contained in the fifth cluster level (330), but one or a substantially fewer number of vector data structures may be contained in cluster "a" at the lowest cluster level (332).

FIG. 3E is a visualization of the fifth step (308) in the data flow. Substantially similar topics may be used to reduce the total number of topics displayed. Reducing the total number of topics displayed may be performed by first selecting a hierarchical level (*e.g.,* the first cluster level (322)). Then, email data structures in the corresponding hierarchical level may be grouped together into a single group corresponding to the cluster of the selected hierarchical level. The name of the group may be the medoid of the cluster of the selected hierarchical level.

For example, assume that the lowest cluster level (332) includes two clusters of email data structures (cluster (332A), identified as "support" and cluster ((332B), identified as "help"). The two clusters are both members of supercluster (322A) that is found in the first cluster level (322). In FIG. 3E, the two clusters are identified by the set of cluster names (334) (*i.e.,* "support" and "help"). Each name in the set of cluster names (334) is the corresponding medoid of the corresponding cluster. In other words, the medoid of supercluster (322A) is "support" and the medoid of cluster (322B) is "help."

However, the desired level organization is at the first cluster level (322). Thus, the emails in the superclusters at the first cluster level (322) are organized together. For example, the emails present the supercluster (322A) are organized together. The medoid of the supercluster (322A) is "support." Thus, the emails in the supercluster (322A) are organized together and labeled as "support," as shown by the arrow (336) in FIG. 3E.

Emails in the other superclusters at the first cluster level (322) are similarly organized. Thus, emails in supercluster (322B) are organized together as described above. Emails in supercluster (322C) are organized together in a similar fashion as described above and labeled as "computers" (the medoid of the supercluster (322B)). Likewise, emails in supercluster (322D), supercluster (322D), supercluster (322E), and supercluster (322F) are likewise organized with each other and labeled with the medoids of the corresponding superclusters. Outliers, such as cluster "i" in FIG. 3D, that exist only in a higher supercluster, may be presented as a separate group of emails. In any case, the email data files are organized according to the superclusters as described above, and displayed to a user as shown in FIG. 4B.

FIG. 4A and FIG. 4B show a user interface displaying a result of the data flow of FIG. 3A through FIG. 3E, in accordance with one or more embodiments. The user interface (400) and reorganized user interface (418) shown in FIG. 4A and FIG. 4B, respectively, may be displayed on the display device (142) of FIG. 1. The process of reorganizing the emails that occurs between FIG. 4A and FIG. 4B may be performed according to the method of FIG. 2 and specifically according to the data flow shown in FIG. 3A through FIG. 3E.

FIG. 4A and FIG. 4B should be viewed together as a whole. Thus, reference numerals in common between FIG. 4A and FIG. 4B refer to similar objects and have similar descriptions.

In FIG. 4A, the user interface (400) includes an email inbox (402). The email inbox (402) includes five emails, email 1 (404), email 2 (408), email 3 (410), email 4 (412), and email (414). Each of the emails has a subject line as shown in Fig. 4A. The contents of the emails (*i.e.,* the body of each email) may be shown in an email display window (416).

While five emails are shown in FIG. 4A for simplicity and clarity, assume that 1,000 total unread emails are present in the email inbox (402). The user desires to better organize the emails without the user manually organizing the emails into folders.

The user therefore selects a sort widget (417). The sort widget (417) is a button, drop down menu, dialog box, *etc.* that the user may select on the user interface (400) in order to initiate the data flow of FIG. 3A through FIG. 3E. The user designates, via a dialog box in the sort widget (417), that the user would like the emails organized into two groups. Thus, in the data flow of FIG. 3D, the emails will be clustered at the fourth cluster level (328). The names of the two groups of emails will be the medoids of the two clusters at the fourth cluster level (328).

After performing the data flow of FIG. 3A through FIG. 3E, the user interface (400) is transformed into the reorganized user interface (418). The reorganized email inbox (420) is the user interface (400), but with the emails reorganized according to the two groups established at the fourth step (306) of FIG. 3D and the fifth step (308) of FIG. 3E. However, rather than "support" (as in FIG. 3E), the medoids of the two superclusters are a tax questions group (422) and a software questions group (424).

The emails are grouped accordingly. Specifically, the email 5 (414), email 1 (404), and email 2 (408) are organized into the tax questions group (422). Within the tax questions group (422), the emails are further reorganized in alphabetical order of subject line. Other further reorganization schemes could be used, such as the order in which the emails we received over time.

Similarly, the email (412) and the email (410) are organized into the software questions group (424). Within the software questions group (424), the emails are further reorganized in alphabetical order, though other further reorganization schemes could be used as described above.

As shown in FIG. 4B, the reorganized user interface (418) labels the groups of emails. Thus, the emails in the tax questions group (422) are highlighted according to a stippling pattern, as shown, and explicitly labeled as the tax questions group (422). The emails in the software questions group (424) are highlighted according to a hash pattern, as shown, and explicitly labeled as the software questions group (424). The reorganized email display window (426) may be resized, relative to the email display window (416) in FIG. 4A, in order to accommodate the additional information displayed in the reorganized user interface (418).

The sort widget (417) is still shown in FIG. 4B. If the user is not satisfied with the reorganization scheme shown in FIG. 4B, then the user may reselect the sort widget (417). The user may select a greater number of groups of emails, in order to more finely organize the emails in the email inbox (402) or the reorganized email inbox (420). A corresponding lower hierarchical level is then applied, as shown in FIG. 3D, resulting in more groups of emails, with each group being labeled according to a medoid of a cluster at the lower hierarchical level.

One or more embodiments may be implemented on a computing system specifically designed to achieve an improved technological result. When implemented in a computing system, the features and elements of the disclosure provide a significant technological advancement over computing systems that do not implement the features and elements of the disclosure. Any combination of mobile, desktop, server, router, switch, embedded device, or other types of hardware may be improved by including the features and elements described in the disclosure.

For example, as shown in FIG. 5A, the computing system (500) may include one or more computer processor(s) (502), non-persistent storage device(s) (504), persistent storage device(s) (506), a communication interface (508) (e.g., Bluetooth interface, infrared interface, network interface, optical interface, *etc.),* and numerous other elements and functionalities that implement the features and elements of the disclosure. The computer processor(s) (502) may be an integrated circuit for processing instructions. The computer processor(s) (502) may be one or more cores or micro-cores of a processor. The computer processor(s) (502) includes one or more processors. The computer processor(s) (502) may include a central processing unit (CPU), a graphics processing unit (GPU), a tensor processing unit (TPU), combinations thereof, *etc.*

The input device(s) (510) may include a touchscreen, keyboard, mouse, microphone, touchpad, electronic pen, or any other type of input device. The input device(s) (510) may receive inputs from a user that are responsive to data and messages presented by the output device(s) (512). The inputs may include text input, audio input, video input, *etc.,* which may be processed and transmitted by the computing system (500) in accordance with one or more embodiments. The communication interface (508) may include an integrated circuit for connecting the computing system (500) to a network (not shown) (*e.g.,* a local area network (LAN), a wide area network (WAN) such as the Internet, mobile network, or any other type of network) or to another device, such as another computing device, and combinations thereof.

Further, the output device(s) (512) may include a display device, a printer, external storage, or any other output device. One or more of the output device(s) (512) may be the same or different from the input device(s) (510). The input device(s) (510) and output device(s) (512) may be locally or remotely connected to the computer processor(s) (502). Many different types of computing systems exist, and the aforementioned input device(s) (510) and output device(s) (512) may take other forms. The output device(s) (512) may display data and messages that are transmitted and received by the computing system (500). The data and messages may include text, audio, video, *etc.,* and include the data and messages described above in the other figures of the disclosure.

Software instructions in the form of computer-readable program code to perform embodiments may be encoded, in whole or in part, temporarily or permanently, on a non-transitory computer-readable medium such as a solid state drive (SSD), compact disk (CD), digital video disk (DVD), storage device, a diskette, a tape, flash memory, physical memory, or any other computer-readable storage medium. Specifically, the software instructions may correspond to computer-readable program code that, when executed by the computer processor(s) (502), is configured to perform one or more embodiments, which may include transmitting, receiving, presenting, and displaying data and messages described in the other figures of the disclosure. Additionally, or alternatively, software instructions in the form of computer-readable program code to perform embodiments may be encoded, in whole or in part, temporarily or permanently, on transient media such as carrier waves and transmission media.

The computing system (500) in FIG. 5A may be connected to or be a part of a network. For example, as shown in FIG. 5B, the network (520) may include multiple nodes (*e.g.,* node X (522), node Y (524)). Each node may correspond to a computing system (500), such as the computing system (500) shown in FIG. 5A, or a group of nodes combined may correspond to the computing system (500) shown in FIG. 5A. By way of an example, embodiments may be implemented on a node of a distributed system that is connected to other nodes. By way of another example, embodiments may be implemented on a distributed computing system (500) having multiple nodes, where each portion may be located on a different node within the distributed computing system. Further, one or more elements of the aforementioned computing system (500) may be located at a remote location and connected to the other elements over a network.

The nodes (*e.g.,* node X (522), node Y (524)) in the network (520) may be configured to provide services for a client device (525), including receiving requests and transmitting responses to the client device (525). For example, the nodes may be part of a cloud computing system. The client device (525) may be a computing system (500), such as the computing system shown in FIG. 5A. Further, the client device (525) may include or perform all or a portion of one or more embodiments.

The computing system of FIG. 5A may include functionality to present data (including raw data, processed data, and combinations thereof) such as results of comparisons and other processing. For example, presenting data may be accomplished through various presenting methods. Specifically, data may be presented by being displayed in a user interface, transmitted to a different computing system, and stored. The user interface may include a graphical user interface (GUI) that displays information on a display device. The GUI may include various GUI widgets that organize what data is shown as well as how data is presented to a user. Furthermore, the GUI may present data directly to the user, *e.g.,* data presented as actual data values through text, or rendered by the computing device into a visual representation of the data, such as through visualizing a data model.

Thus, from one perspective, there has now been described a method including applying a language model to datasets to generate topics assigned to the datasets. Each of the topics includes at least one of a natural language text word and a natural language phrase. The method also includes applying an encoding model to the topics to generate a corresponding vector data structures storing embedded topics. Each embedded topic of the embedded topics is associated with one corresponding vector in the vector data structures. The method also includes applying a clustering model to the vector data structures to generate a cluster including a subset of the vector data structures. The subset includes a reduced number of the vector data structures. The method also includes modifying, according to the cluster, the datasets.

As used herein, the term "connected to" contemplates multiple meanings. A connection may be direct or indirect (*e.g.,* through another component or network). A connection may be wired or wireless. A connection may be a temporary, permanent, or a semi-permanent communication channel between two entities.

The various descriptions of the figures may be combined and may include or be included within the features described in the other figures of the application. The various elements, systems, components, and steps shown in the figures may be omitted, repeated, combined, or altered as shown in the figures. Accordingly, the scope of the present disclosure should not be considered limited to the specific arrangements shown in the figures.

In the application, ordinal numbers (*e.g.,* first, second, third, *etc*.) may be used as an adjective for an element (*i.e.*, any noun in the application). The use of ordinal numbers is not to imply or create any particular ordering of the elements nor to limit any element to being only a single element unless expressly disclosed, such as by the use of the terms "before", "after", "single", and other such terminology. Rather, ordinal numbers distinguish between the elements. By way of an example, a first element is distinct from a second element, and the first element may encompass more than one element and succeed (or precede) the second element in an ordering of elements.

Further, unless expressly stated otherwise, the conjunction "or" is an inclusive "or" and, as such, automatically includes the conjunction "and," unless expressly stated otherwise. Further, items joined by the conjunction "or" may include any combination of the items with any number of each item, unless expressly stated otherwise.

In the above description, numerous specific details are set forth in order to provide a more thorough understanding of the disclosure. However, it will be apparent to one of ordinary skill in the art that the technology may be practiced without these specific details. In other instances, well-known features have not been described in detail to avoid unnecessarily complicating the description. Further, other embodiments not explicitly described above can be devised which do not depart from the scope of the claims as disclosed herein. Accordingly, the scope should be limited only by the attached claims.

Further examples of feature combinations taught by the present disclosure are set out in the following numbered clauses:
1. A method comprising:
   applying a language model to a plurality of datasets to generate a plurality of topics assigned to the plurality of datasets, wherein each of the plurality of topics comprises at least one of a natural language text word and a natural language phrase;
   applying an encoding model to the plurality of topics to generate a corresponding plurality of vector data structures storing a plurality of embedded topics, wherein each embedded topic of the plurality of embedded topics is associated with one corresponding vector in the plurality of vector data structures;
   applying a clustering model to the plurality of vector data structures to generate a cluster comprising a subset of the vector data structures, wherein the subset comprises a reduced number of the plurality of vector data structures; and
   modifying, according to the cluster, the plurality of datasets.
2. The method of clause 1, wherein modifying comprises generating an organized data structure by organizing the plurality of datasets into groups corresponding to the cluster, and wherein the method further comprises: presenting the organized data structure.
3. The method of clause 1 or clause 2, wherein:
   applying the clustering model generates a second subset of the plurality of vector data structures,
   modifying comprises generating an organized data structure by organizing the plurality of datasets into a first group corresponding to the cluster and a second group corresponding to a second cluster comprising a second subset of the plurality of vector data structures, and sorting the first group and the second group into an organized list, and
   the method further comprises presenting the organized list.
4. The method of any preceding clause, wherein the cluster comprises ones of the plurality of vector data structures that are within a pre-determined semantic distance of a selected vector in the plurality of vector data structures.
5. The method of any preceding clause, wherein:
   the cluster comprises ones of the plurality of vector data structures that are within a pre-determined semantic distance of a selected vector in the plurality of vector data structures, and
   the selected vector comprises a medoid of the cluster.
6. The method of any preceding clause, further comprising:
   assigning an identifier to the cluster, wherein:
      the identifier comprises a topic name of a medoid of the cluster,
      the topic name is a label of an embedded topic in the plurality of embedded topics, and
      the embedded topic corresponds to a vector data structure in the subset of the vector data structures that comprises the medoid of the cluster.
7. The method of any preceding clause, further comprising:
   applying a label to the cluster, and
   wherein modifying comprises:
      organizing the plurality of datasets, according to the cluster, into a subset of the plurality of datasets, and
      displaying, according to the label, the subset of the plurality of datasets.
8. The method of clause 7, wherein displaying the subset of the plurality of datasets comprises at least one of highlighting the subset of the plurality of datasets, assigning the label to the subset of the plurality of datasets as a group, and assigning the label to each subset of the plurality of datasets.
9. The method of any preceding clause, wherein the language model comprises a large language model and applying the language model comprises generating a prompt and inputting the prompt and the plurality of datasets to the large language model.
10. The method of any preceding clause, further comprising:
   deduplicating, before applying the encoding model, duplicate topics from the plurality of topics.
11. The method of any preceding clause, further comprising:
   receiving a value designating a number of permitted topics,
   wherein applying the language model further comprises generating a prompt and inputting the prompt and the plurality of datasets to a large language model, and
   wherein the prompt further comprises an instruction to limit the number of topics generated to the value such that a total number of the plurality of topics are limited to the value.
12. The method of any preceding clause, further comprising:
   receiving a value designating a number of permitted topics,
      wherein applying the language model further comprises generating a prompt and inputting the prompt and the plurality of datasets to a large language model, and
      wherein the prompt further comprises an instruction to limit the number of topics generated to the value such that a total number of the plurality of topics are limited to the value; and
   further reducing, by deduplicating, the total number of the plurality of topics to generate the plurality of topics.
13. The method of any preceding clause, wherein the cluster comprises one of the plurality of vector data structures that are within a pre-determined semantic distance of a selected vector in the plurality of vector data structures, and wherein the method further comprises:
   receiving a request to broaden a topic in the plurality of topics; and
   increasing, prior to applying the clustering model, the pre-determined semantic distance.
14. The method of any preceding clause, wherein:
   the plurality of datasets comprise a plurality of electronic messages,
   each electronic message in the plurality of electronic messages comprises one dataset in the plurality of datasets,
   the cluster comprises a group of the plurality of electronic messages organized by a subject type,
   modifying the plurality of datasets comprises re-organizing the plurality of electronic messages according to the subject type, and
   the method further comprises:
      displaying, labeling, and highlighting the group according to the subject type.
15. A system comprising:
   a processor;
   a data repository in communication with the processor and storing:
      a plurality of datasets,
      a plurality of topics assigned to the plurality of datasets, wherein each of the plurality of topics comprises at least one of a natural language text word and a natural language phrase,
      a corresponding plurality of vector data structures storing a plurality of embedded topics,
      a cluster comprising a subset of the vector data structures, wherein the subset comprises a reduced number of the plurality of vector data structures;
   a language model, when executed by the processor and applied to the plurality of datasets, generates the plurality of topics;
   an encoding model, when executed by the processor and applied to the plurality of topics, generates the corresponding plurality of vector data structures such that each embedded topic of the plurality of embedded topics is associated with one corresponding vector in the plurality of vector data structures;
   a clustering model, when executed by the processor and applied to the plurality of vector data structures, generates the cluster; and
   a server controller, when executed by the processor and applied to plurality of datasets, modifies the plurality of datasets according to the cluster.
16. The system of clause 15, wherein:
   the language model comprises a large language model, and
   the language model is applied to the plurality of topics by generating a prompt and inputting the prompt and the plurality of datasets to the large language model.
17. The system of clause 15 or clause 16, wherein the encoding model comprises a bidirectional encoder representations from transformers (BERT) machine learning model.
18. The system of any of clauses 15 to 17, wherein the clustering model comprises one of a cosine similarity machine learning model for hierarchical clustering and a K-means clustering machine learning model.
19. The system of any of clauses 15 to 18, further comprising:
   a display device in communication with the processor,
   wherein the server controller is further executable by the processor to:
      display a modified plurality of datasets generated when the server controller modifies the plurality of datasets, and
      display a label applied to each dataset of the modified plurality of datasets.
20. A method comprising:
   applying a language model to a plurality of datasets to generate a plurality of topics assigned to the plurality of datasets, wherein each of the plurality of topics comprises at least one of a natural language text word and a natural language phrase;
   applying an encoding model to the plurality of topics to generate a corresponding plurality of vector data structures storing a plurality of embedded topics, wherein each embedded topic of the plurality of embedded topics is associated with one corresponding vector in the plurality of vector data structures;
   applying a clustering model to the plurality of vector data structures to generate:
      first a cluster comprising a first subset of the vector data structures that are within a first pre-determined semantic distance, and
      a second cluster comprising a second subset of the plurality of vector data structures that are within a second pre-determined semantic distance, wherein the first subset and the second subset each comprises a reduced number of the plurality of vector data structures; and
   modifying, according to the first cluster and the second cluster, the plurality of datasets to generate an organized data structure by organizing the plurality of datasets into a first group corresponding to the first cluster and a second group corresponding to the second cluster;
   sorting the first group and the second group into an organized list;
   labeling the first group according to a first name associated with a first medoid of the first subset;
   labeling the second group according to a second name associated with a second medoid of the second subset; and
   presenting the organized list, including presenting the first group labeled with the first name and presenting the second group labeled with the second name.

## Claims

1. A method comprising:
applying a language model to a plurality of datasets to generate a plurality of topics assigned to the plurality of datasets, wherein each of the plurality of topics comprises at least one of a natural language text word and a natural language phrase;
applying an encoding model to the plurality of topics to generate a corresponding plurality of vector data structures storing a plurality of embedded topics, wherein each embedded topic of the plurality of embedded topics is associated with one corresponding vector in the plurality of vector data structures;
applying a clustering model to the plurality of vector data structures to generate a cluster comprising a subset of the vector data structures, wherein the subset comprises a reduced number of the plurality of vector data structures; and
modifying, according to the cluster, the plurality of datasets.

2. The method of claim 1, wherein modifying comprises generating an organized data structure by organizing the plurality of datasets into groups corresponding to the cluster, and wherein the method further comprises:
presenting the organized data structure.

3. The method of claim 1 or claim 2, wherein:
applying the clustering model generates a second subset of the plurality of vector data structures,
modifying comprises generating an organized data structure by organizing the plurality of datasets into a first group corresponding to the cluster and a second group corresponding to a second cluster comprising a second subset of the plurality of vector data structures, and sorting the first group and the second group into an organized list, and
the method further comprises presenting the organized list.

4. The method of any preceding claim, wherein the cluster comprises ones of the plurality of vector data structures that are within a pre-determined semantic distance of a selected vector in the plurality of vector data structures.

5. The method of any preceding claim, wherein:
the cluster comprises ones of the plurality of vector data structures that are within a pre-determined semantic distance of a selected vector in the plurality of vector data structures, and
the selected vector comprises a medoid of the cluster.

6. The method of any preceding claim, further comprising:
assigning an identifier to the cluster, wherein:
the identifier comprises a topic name of a medoid of the cluster,
the topic name is a label of an embedded topic in the plurality of embedded topics, and
the embedded topic corresponds to a vector data structure in the subset of the vector data structures that comprises the medoid of the cluster.

7. The method of any preceding claim, further comprising:
applying a label to the cluster, and
wherein modifying comprises:
organizing the plurality of datasets, according to the cluster, into a subset of the plurality of datasets, and
displaying, according to the label, the subset of the plurality of datasets, for example, wherein displaying the subset of the plurality of datasets comprises at least one of highlighting the subset of the plurality of datasets, assigning the label to the subset of the plurality of datasets as a group, and assigning the label to each subset of the plurality of datasets.

8. The method of any preceding claim, wherein the language model comprises a large language model and applying the language model comprises generating a prompt and inputting the prompt and the plurality of datasets to the large language model.

9. The method of any preceding claim, further comprising:
deduplicating, before applying the encoding model, duplicate topics from the plurality of topics.

10. The method of any preceding claim, further comprising:
receiving a value designating a number of permitted topics,
wherein applying the language model further comprises generating a prompt and inputting the prompt and the plurality of datasets to a large language model, and
wherein the prompt further comprises an instruction to limit the number of topics generated to the value such that a total number of the plurality of topics are limited to the value.

11. The method of any preceding claim, further comprising:
receiving a value designating a number of permitted topics,
wherein applying the language model further comprises generating a prompt and inputting the prompt and the plurality of datasets to a large language model, and wherein the prompt further comprises an instruction to limit the number of topics generated to the value such that a total number of the plurality of topics are limited to the value; and
further reducing, by deduplicating, the total number of the plurality of topics to generate the plurality of topics.

12. The method of any preceding claim, wherein the cluster comprises one of the plurality of vector data structures that are within a pre-determined semantic distance of a selected vector in the plurality of vector data structures, and wherein the method further comprises:
receiving a request to broaden a topic in the plurality of topics; and
increasing, prior to applying the clustering model, the pre-determined semantic distance.

13. The method of any preceding claim, wherein:
the plurality of datasets comprise a plurality of electronic messages,
each electronic message in the plurality of electronic messages comprises one dataset in the plurality of datasets,
the cluster comprises a group of the plurality of electronic messages organized by a subject type,
modifying the plurality of datasets comprises re-organizing the plurality of electronic messages according to the subject type, and
the method further comprises:
displaying, labeling, and highlighting the group according to the subject type.

14. A system comprising:
a processor;
a data repository in communication with the processor and storing:
a plurality of datasets,
a plurality of topics assigned to the plurality of datasets, wherein each of the plurality of topics comprises at least one of a natural language text word and a natural language phrase,
a corresponding plurality of vector data structures storing a plurality of embedded topics,
a cluster comprising a subset of the vector data structures, wherein the subset comprises a reduced number of the plurality of vector data structures;
a language model, when executed by the processor and applied to the plurality of datasets, generates the plurality of topics;
an encoding model, when executed by the processor and applied to the plurality of topics, generates the corresponding plurality of vector data structures such that each embedded topic of the plurality of embedded topics is associated with one corresponding vector in the plurality of vector data structures;
a clustering model, when executed by the processor and applied to the plurality of vector data structures, generates the cluster; and
a server controller, when executed by the processor and applied to plurality of datasets, modifies the plurality of datasets according to the cluster.

15. The system of claim 14, wherein the encoding model comprises a bidirectional encoder representations from transformers (BERT) machine learning model.
